# EUROPEAN PATENT SPECIFICATION

(11) **EP 0 958 151 B1**
(45) Date of publication and mention of the grant of the patent: **19.12.2001**
(21) Application number: 97904155.5
(22) Date of filing: 04.02.1997
(51) Int. Cl.: B60C 11/11, B60C 11/04, B60C 11/13

(54) **INDUSTRIAL SERVICE AGRICULTURAL TIRE**
INDUSTRIELLER LANDWIRTSCHAFTNUTZREIFEN
PNEU POUR MATERIEL AGRICOLE DESTINE A UN USAGE INDUSTRIEL

(43) Date of publication of application: 24.11.1999
(73) Proprietor: THE GOODYEAR TIRE & RUBBER COMPANY, Akron, Ohio 44316-0001 (US)
(72) Inventor: BAUS, Andre, Emile, Joseph, L-3273 Bettembourg (LU)
(74) Representative: Leitz, Paul
(86) International application number: US9701623
(87) International publication number: WO9833669

(56) References cited:
- EP-A- 0 719 660
- US-A- 4 649 976
- US-A- 5 180 453
- US-A- 5 464 050
- PATENT ABSTRACTS OF JAPAN vol. 096, no. 006, 28 June 1996 & JP 08 040020 A (BRIDGESTONE CORP), 13 February 1996,

## Description

### Technical Field

This invention relates to a pneumatic agricultural tire for an industrial type tractor or like vehicle.

### Background Art

Farm tire designs for industrial service are classified as R-4 service. Overall R-4 service is quite severe and typically involves high loads at a large degree of roading. The vehicles to which the tires are mounted typically are exposed to large amounts of debris, hard packed soil conditions and high load service conditions.

Often times the vehicle has a back hoe bucket or a front skid loader attached to the vehicle. The tires must traverse gravel and broken concrete and hard packed dirt normally. Occasionally the work site can get rain soaked requiring good traction in wet soil conditions.

These tires are generally relatively small and typically have a nominal rim diameter of 28" (71 cm) or less. They generally have a nonskid depth at the centerline of the tire at approximately 1" (2.54 cm). A typical tire may be a 400/70R24 tire. This tire when produced in a radial construction will have a carcass with 3 to 4 plies of synthetic cord reinforcement. The cords generally are nylon or polyester. The carcass will further include four belts of high flex polyester, nylon or aramid. Historically, these tires have been all fabric reinforced in order to provide better ride and handling.

JP-A-8040020 discloses a heavy duty pneumatic tire with improved manoeuvrability on rough roads. The tread consists of lug grooves extending in the tire's width direction, lugs bounded by these lug grooves and a pair of platforms placed on each of the lugs, dividing it into almost equal three portions, and connecting the neighboring lug grooves with a groove depth less than that of the lug groove.

There has been a continual tradeoff in attempting to increase the aggressive offroad and tractor performance of these tires while maintaining the treadwear durability and ride requirements. The invention disclosed in this patent application teaches a novel tread that is both comfortable riding, long wearing while also achieving superior offroad traction in both the forward and reverse direction of vehicle travel.

### Disclosure of the Invention

**Summary.** A radial ply pneumatic tire 20 for industrial service applications is disclosed in accordance to claim 1.

Preferably, the trailing enlarged lug head 66 of a central lug 60 is connected to a leading enlarged lug head 64 of a circumferentially adjacent central lug head 60 by a reduced height tie bar 70. The central lug 60 has a radial height h as measured from the inner tread base 34 and the tie bar 70 connecting the lug heads 64,66 has a radial height h_{T1} of at least 30% h and preferably at least 50% h. The lugs 40 of the first row and the axially adjacent central lugs 60 are spaced a distance S less than the minimum width of the lug 40, within the distance S a tie bar 80 extends between the axially adjacent lugs 40 of the first row and the lugs 60 of the central row, the tie bar 80 having a radial height h_{T2} of at least one half the lug height h.

Similarly, the lugs 50 of the second row and the axially adjacent central lugs 60 are spaced a distance S less than the minimum width of the lug 50, within the distance S a tie bar 80 extends between the axially adjacent lugs 50 of the second row and the lugs 60 of the central row, the tie bar 80 having a radial height h_{T2} of less than one half the lug height h.

The radial ply pneumatic tire 20 according to the invention has the net-to-gross ratio as measured around the circumference of the tire less than 50%.

The curvatures R₁ and R₂ when extended to intersect the equatorial plane EP of the tire 20 have tangent lines 90 at the point of intersection which are inclined at an angle θ, θ being less than 60° relative to the equatorial plane. Preferably θ equals less than 45° relative to the equatorial plane.

The leading and trailing edges 41,42,51,52 of the first and second rows of lugs 40,50 have tangency lines 92 relative to the curvature R₁ or R₂ at an axially outermost point 45,55 along the respective edge, the tangency being inclined at an angle αₒ of about 90° relative to the equatorial plane EP.

**Definitions.** "Aspect Ratio" means the ratio of a tire's section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Bias Ply Tire" means that the reinforcing cords in the carcass ply extend diagonally across the tire from bead-to-bead at about a 25-65° angle with respect to the equatorial plane of the tire, the ply cords running at opposite angles in alternate layers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction.

"Design Rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization--Standards Manual and the term design rim means the same as the standard measurement rims. In Japan, the standard organization is The Japan Automobile Tire Manufacturer's Association.

"Design Rim Width" is the specific commercially available rim width assigned to each tire size and typically is between 75% and 90% of the specific tire's section width.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Inner" means toward the inside of the tire and "outer" means toward its exterior.

"Lateral Edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Net-to-gross Ratio" means the ratio of the surface are of the normally loaded and normally inflated tire tread rubber that makes contact with a hard flat surface, divided by the total area of the tread, including noncontacting portions such as grooves as measured around the entire circumference of the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" (SH) means the radial distance from the nominal rim diameter to the outer diameter of the tire at its equatorial plane.

"Section Width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Tire Design Load" is the base or reference load assigned to a tire at a specific inflation pressure and service condition; other load-pressure relationships applicable to the tire are based upon that base or reference.

"Trailing" refers to a portion or part of the tread that contacts the ground last, with respect to a series of such parts or portions during rotation of the tire in the direction of travel.

"Tread Arc Width" (TAW) means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subject to any load.

"Tread Width" means the arc length of the tread surface in the axial direction, that is, in a plane parallel to the axis of rotation of the tire.

"Unit Tread Pressure" means the radial load borne per unit area (square centimeter or square inch) of the tread surface when that area is in the footprint of the normally inflated and normally loaded tire.

### Brief Description of Drawings.

The following is a brief description of the drawings in which like parts bear like reference numerals and in which:
Fig. 1 is a perspective view of a first embodiment tire according to the invention.
Fig. 2 is a plan view of the tire of Fig. 1.
Fig. 3 is an enlarged perspective fragmentary view of a portion of the tread of the tire taken from Fig. 2.
Fig. 4 is a cross-sectional view of the tire taken along lines 4-4 of Fig. 2.
Figs. 5 and 6 are plan views of a fragmentary portion of the tread of the tire according to the present invention.

### Detailed Description of the Invention.

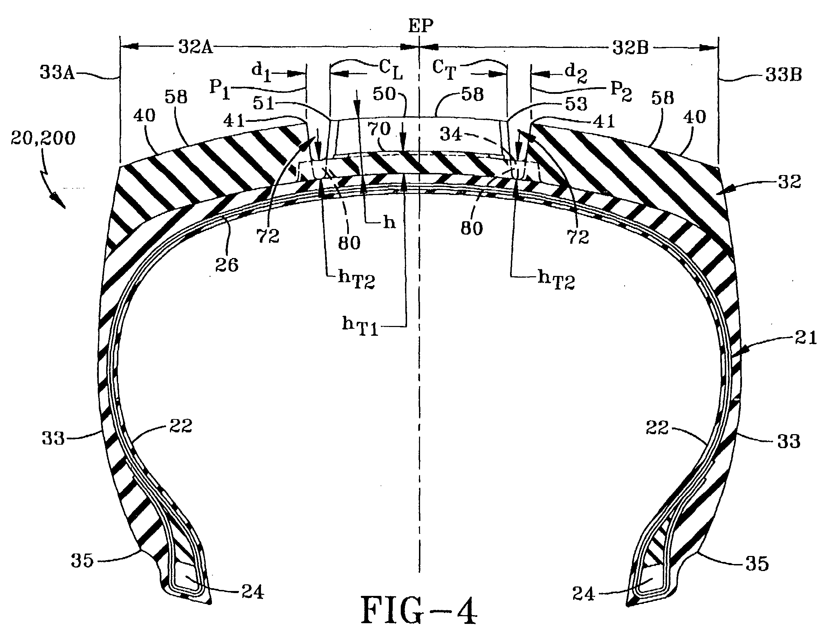

Now referring to Fig. 4 a tire is shown in cross-sectional view generally as reference numeral 20. The tire has a casing 21 having one or more carcass plies 22 extending circumferentially about the axis rotation of the tire. As illustrated the tire preferably has 3 to 4 cord reinforced plies having synthetic nylon or polyester cords. The carcass plies are anchored around a pair of substantially inextensible annular beads 24. A belt reinforcing member 26 has one or more belt plies disposed radially outward from the carcass plies. Preferably four belts are employed. The belts being of a polyester, nylon or aramid cord reinforcement alternatively the cords can be of an ultra high tensile monofilament steel cord reinforcement. These belt plies provide reinforcement for the crown region of the tire 20. A circumferentially extending tread 32 is located radially outwardly of the belt reinforcing structure 26.

A sidewall portion 33 extends radially inwardly from each axial or lateral tread edge 33A,33B of the tread to an annular bead portion 35 having the beads 24 located therein. Carcass plies 22 preferably have the cords oriented radially. The number of plies depends on the load carrying requirements of the tire. The figures illustrate the preferred tread pattern made in a non-directional fashion.

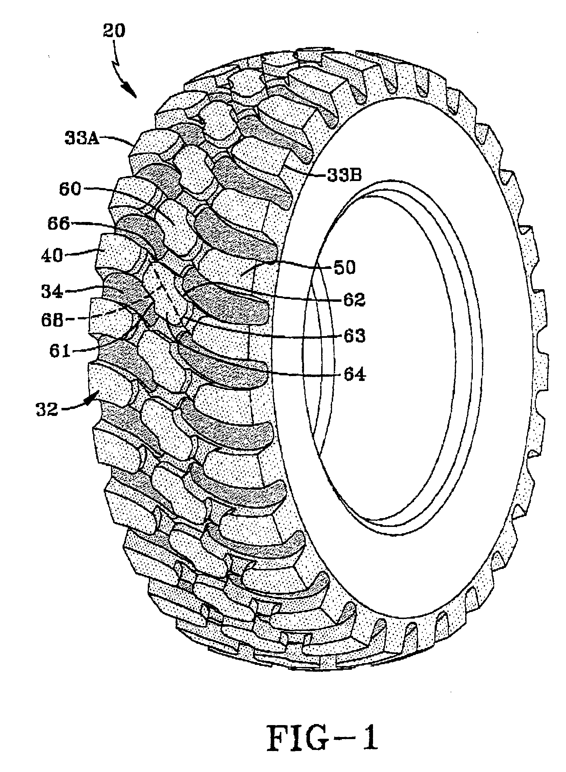

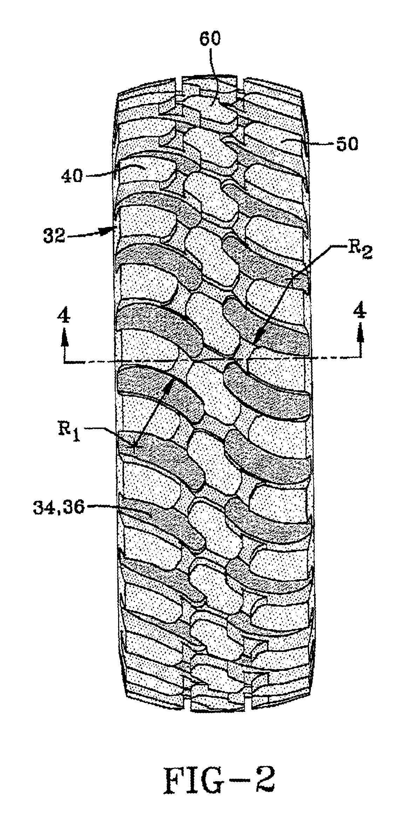

Now referring to Figs. 1, a tire 20 according to the present invention, is illustrated. The tire 20 according to the present invention as a unique non-directional tread 32. The tread 32 has a first tread edge 33A and a second tread edge 33B. Disposed between the tread edges 33A and 33B is an inner tread 34 and a plurality of lugs 40,50 and 60 extending radially outwardly from the inner tread 34, As illustrated in Fig. 2 each central lug 60 has a radially outer surface 68, a leading first edge 61, a trailing second edge 62, and a center line 63 between the first and second edges. Each central lug 60 extends generally circumferential from an enlarged leading edge lug head portion 64 to a trailing enlarged lug head portion 66.

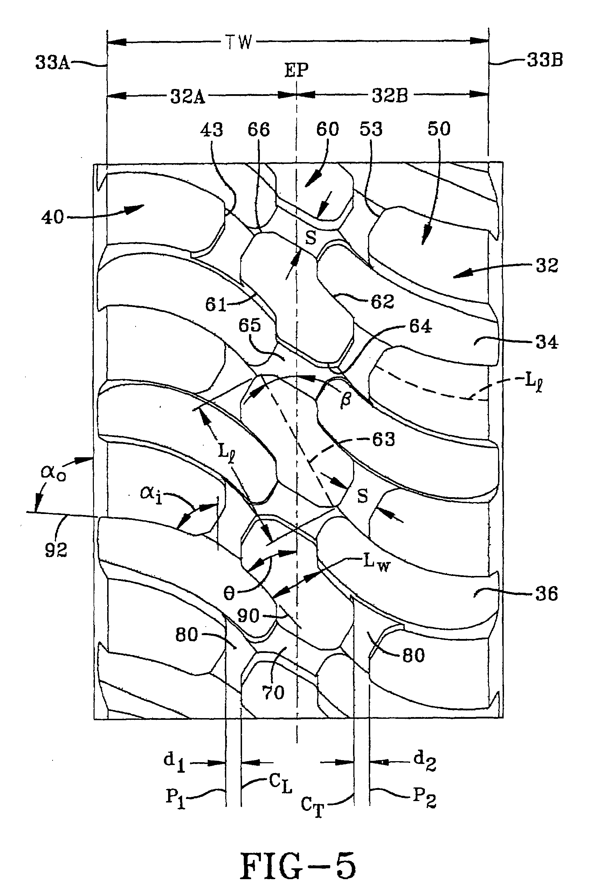

As shown in Fig. 5, the average distance along the center line 63 between the leading and trailing ends 61,62 defines the total lug length L₁ of the central lug 60. The length L₁ is at least 10% of the tread width, preferably about 30%.

The distance extending substantially perpendicularly between the leading and trailing edges 61,62 of the central lug 60 define the average lug width (l_{w}). The radial distance extending between the inner tread 34 and the tread edges 61,62 of the lug 60 defines the radial lug height h. At the equatorial plane of the tire 20 the lug height preferably is an R-4 type lug height as specified by the Tire & Rim Industry standard for industrial service applications.

The central lugs 60 are arranged in a circumferentially repeating row of lugs 60, each lug 60 extends crossing the equatorial plane (EP). The circumferentially adjacent central lugs 60 are similarly oriented. Each lug 60 preferably lies equally within each of the respective tread halves 32A or 32B. The leading edges 61 excluding the leading edge lug head 64 as shown lie entirely within tread half 32A while the trailing edges 62 excluding the trailing edge lug head 66 lie entirely within the tread half 32B. These central lugs 60 have an enlarged lug heads 64,66 at the trailing and leading edges 61,62 of the lug 60. The average width of the lugs 60 is slightly enlarged relative to the average width of the shoulder lugs 40,50. This enlarged central lug 60 is extremely durable and provides excellent traction and ride performance

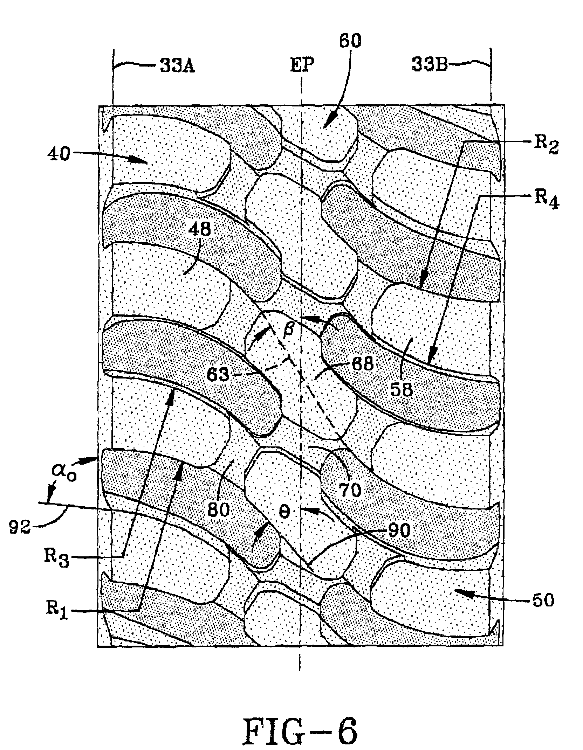

The ride performance and traction capabilities is further enhanced by the employment of a plurality of shoulder lugs 40,50 which extend from each respective tread edge 33A or 33B and lie entirely within their respective tread half 32A or 32B. The shoulder lugs 40 and 50 have a total lug length L₁ about equal to the total lug length L₁ of the central lug 60. As shown, the shoulder lugs have a lug length L₁ of about 10 to 30% of the tread width. The shoulder lugs 40,50 are divided into two rows. The first row of shoulder lugs 40 has an axially inner end 43 that is located substantially circumferentially aligned with the axially inner ends 53 of the second row of lugs 50. The second row of shoulder lugs 50 extend from the tread edge 33B and have a length substantially equal to the length of the first row of shoulder lugs 40. The second row of shoulder lugs 50 have an axially inner end 53 that is circumferentially located generally aligned with the axially inner ends 43 of the first row of lugs 40. As shown in Fig. 6, both the first row and second row of shoulder lugs 40,50 have preferably a uniform curvature. The axially inner inclination α₁ being about 45° relative to the equatorial plane of the axially outer inclination αₛ is about 90° relative to the equatorial plane. As further shown in Fig. 6, the central lug 60 has a middle portion which has a center line 63 intersecting the leading and trailing ends of the enlarged lug heads 64,66 lying between edges 61,62. The centerline 63 is oriented at an angle β of less than 50°, preferably about than 45° relative to the equatorial plane.

As shown in Fig. 5, the net-to-gross ratio of the tread is less than 50% preferably 45%. The space between the lugs creates large soil discharge channels 36. These channels create a very open tread pattern. The openness of the tread pattern further enhances the self-cleaning properties of the tread 32 keeping it from packing with mud,

With further reference to Fig. 5, the first row and second row of shoulder lugs 40,50 and the central lugs 60 are axially spaced at the outer surface 48,58 and 68 of the lugs 40,50,60 such that the axially inner ends 43,53 of the first and second rows of shoulder lugs 40,50 are axially aligned within each respective row. The leading ends of lug head 64 and the trailing ends of lug head 66 of the central lugs 60 are also axially aligned with each circumferentially adjacent central lugs respective leading and trailing ends. A plane P₁ is tangent to the inner ends 43 of the first row of shoulder lugs 40 and is spaced an axially distance d₁ from a plane C_{L} tangent to the ends of the trailing edge 61 of the central lugs 60. A plane P₂ tangent to the axially inner ends 53 of the second row of the shoulder rows 50 is spaced a distance d₂ from a plane C_{T}. The plane C_{T} is tangent to the ends of the trailing edge 62 of the central lugs 60. The distance d₁ and d₂ form two circumferentially continuous straight channels 72 around the periphery of the tread 32. The agricultural tire preferably has the distances d₁ and d₂ being equal and the planes C_{T} and C_{L} each located an axial distance of 5% of the tread width or more from the equatorial plane (EP) as illustrated. Preferably the plane C_{T} and C_{L} are equally spaced from the equatorial plane (EP) a distance of at least 10% of the tread width.

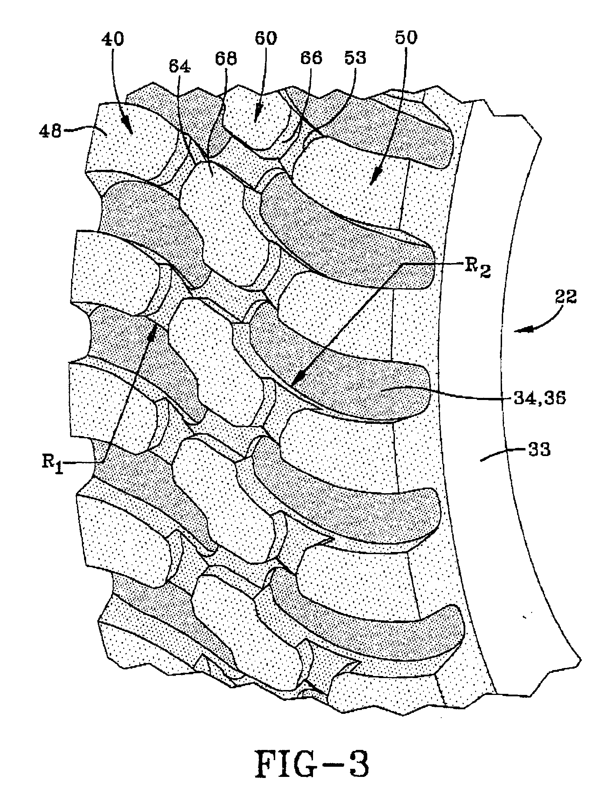

With reference to Figs. 1-6 a tread 32 of the tire 20 is shown having a non-directional tread pattern. The tread 32 of tire 20 has the first row of shoulder lugs 40 oppositely oriented but similarly inclined relative to the shoulder lugs 50 of the opposite row as can be seen from the perspective view of Fig. 6 and the plan view of Fig. 7, the lugs 40 and 50 extend in a substantially curvilinear fashion across the tread 32. In the tire 20 when the tire is normally loaded and inflated, the tread 32 exhibits a net-to-gross ratio of less than 50% preferably about 45%. The tire 20 exhibits a nominal rim diameter of 28" (71 cm) or less and a tread lug height h that is measured from the inner tread 34 to the radially outer surface 68 of the lugs 60 at the equatorial plane of an industry standard R-4 lug height. For example, in a 400/70R24 tire, the nonskid depth at the centerline of the tires 20 will be approximately one inch (2.5 cm).

With reference to Fig. 4 as can be seen from the cross-sectional view of the tire, the tire 20 has a constant tread arc at the shoulder, the nonskid depth increases to approximately 125% to 175%, preferably 150%, of the nonskid depth as measured from the equatorial plane (EP) of the tire 20.

Due to the contour of the tread 32 it can easily be appreciated that the center of the tread bears most of the load carrying capacity while the shoulder regions are provided to increase traction and provide additional biting or digging surfaces which provide traction particularly in loose soil or loose debris. It is believed preferable that the tread lugs 40,50 be reasonably braced using generous angles and tie bar bracing 70,80 to further enhance the stiffness of the lugs and to improve its durability.

One novel feature of this non-directional tread pattern of the tire 20 is in Figs. 1-5 is that the lugs 40 of the first row and the lugs 50 of the second row 46 do not axially overlap at the equatorial plane. This was a common feature employed in industrial service R-4 tires of the prior art Secondarily, the central lugs 60 do not overlap or interlock with either the first or the second rows of shoulder lugs 50, Again, this feature is not believed to have been employed in this type of tire heretofore. The benefits of this feature is that the tread pattern remains relatively open increasing the overall tractive performance of the tire while not sacrificing the overall ride performance.

An equally important novel feature of the lugs 40,60 and 50,60 is that a leading edge 51,61 and trailing edges 42,62 of the shoulder lug and central lugs excluding the enlarged lug heads 64,66 are of identical curvatures R₁ or R₂ respectively as shown. This means that the biting edges of two lugs 40,60 or lugs 50,60 depending on the direction of travel enter the footprint of the tire with a similar single radius of curvature and in combination with an enlarged lug head 64,66 of a central lug 60 create a traction enhancing elongated lug effect. This elongation of similar tractive curvature extends beyond the equatorial plane regardless of the direction of tread. This creates a balance of forward or reverse draw bar traction efficiency which is approximately equal regardless of the rotation direction.

This further enables the tire to be produced in a single mold cutting tooling cost in one half.

As shown the illustrated preferred embodiment tire in a 400/70R24 tire had an R₁ of about 200 mm and an R₂ equal to R₁, preferably the tire shown had an R₁, R₂ of 205.8, R₁ being the radius of curvature of the leading edge 41 of lug 40 and R₂ being the radius of curvature of the trailing edge 52 of lug 50. The respective opposite edges 42,52 had radii of curvature less than R₁ and R₂, those curvatures R₃ and R₄ respectively were about 180 mm, actually 179.1 mm. This combination of curvatures means that the lugs 40,50 are wider at the lateral edges 33A, 33B and progressively narrower toward the ends 43,53 respectively. Similarly, the soil discharge channels 36 widen as they extend axially further enhancing the soil discharge performance of the tire 20.

As further shown, the tie bars 70 in the preferred tire had a radial height equal to 40% lₕ and the tie bars 80 had a radial height of 33% to 40% lₕ. This insured that sufficient openness of the lug pattern prevents soil packing. The tie bars yield an open somewhat flexible tread with very durable lugs 40,50,60 due to the interconnection of the lug via the tie bars 70,80.

## Claims

1. A radial ply pneumatic tire 20 for industrial service applications, the tire 20 having a casing 21, the casing 21 having at least one ply 22 reinforced by rubber coated cords, a pair of annular extending bead cores 24, the at least one ply 22 being wrapped about each bead core 24 and extending therebetween, a belt reinforcing structure 28 reinforced with rubber coated cords, and a tread 32 disposed radially outward of the casing 21, the tread 32 having an inner tread base 34, two lateral edges 33A, 33B, the distance halfway between the lateral edges 33A, 33B define the tread equatorial plane (EP) and a plurality of lugs 40,50,60 extending radially outwardly from the inner tread base 34, the tread having;
three rows of lugs 40,50,60, a first row 40 extending axially inwardly from a first shoulder region of the tread 32, a second row 50 extending axially inwardly from a second shoulder region of the tread 32, and a central row 60 positioned between the first and second rows 40,50, the lugs 40 of the first row being similar in shape but opposite in orientation relative to the lugs 50 of the second row, each lug 40 of the first row lying within a first tread half 32A, each lug 50 of the second row lying within a second tread half 32B, the lugs 60 of the central row lying in both the first tread half 32A and second tread half 32B, the lugs 40,50,60 each having a leading edge 41,51,61 and a trailing edge 42,52,62, the tread being **characterized by**:
the distance along a centerline between the leading first and trailing second edge defines the total length Lᵢ, each lug 40,50,60 has a total lug length of at least 10% to 30% of the total tread width, the central lug 60 having an enlarged leading edge lug head portion 64 extending from the leading edge 61 and an enlarged trailing edge lug head 66 extending from the trailing edge 62, the enlarged lug head portions 64,66 intersecting the equatorial centerplane of the tire, the leading edge 41 of a lug 40 of the first row and the leading edge 61 of the central lug 60 excluding the leading edge enlarged lug head portion 64 being defined by a constant radius of curvature R₁ and the trailing edge 52 of a second row lug 50 and the trailing edge 62 of the central lug 60 excluding the enlarged trailing edge lug head portion 66 being defined by a constant radius curvature R₂, wherein the origin of the radii of curvature R₁,R₂ are circumferentially oppositely located in one tread half 32A relative to the other tread half 32B.

2. The radial ply pneumatic tire 20 of claim 1 wherein the trailing edge enlarged lug head 62 of a central lug 60 is connected to a leading edge enlarged lug head 64 by a reduced height tie bar 70.

3. The radial ply pneumatic tire 20 of claim 2 wherein the central lug 60 has a radial height h as measured from the inner tread base 34 and the tie bar 70 connecting the lug heads 62,64 has a radial height h_{T1} of at least 50% h.

4. The radial ply pneumatic tire 20 of claim 3 wherein the lugs 40 of the first row and the axially adjacent central lugs 60 are spaced a distance s less than the minimum width of the lug 40, within the distance s a tie bar 80 extends between the axially adjacent lugs 40 of the first row and the lugs of the central row 60, the tie bar having a radial height h_{T2} of at least one half the lug height h.

5. The radial ply pneumatic tire of claim 3 wherein the lugs 50 of the second row and the axially adjacent central lugs 60 are spaced a distance s less than the minimum width of the lug, within the distance s a tie bar 80 extends between the axially adjacent lugs 50 of the second row and the lugs 60 of the central row, the tie bar 80 having a radial height h_{T2} of at least one half the lug height h.

6. The radial ply pneumatic tire 20 of claim 1 wherein the net-to-gross ratio as measured around the circumference of the tire 20 is less than 50%.

7. The radial ply pneumatic tire 20 of claim 1 wherein the curvatures R₁ and R₂ when extended to intersect the equatorial plane of the tire have tangent lines at the point of intersection inclined at an angle θ, θ being less than 60° relative to the equatorial plane.

8. The radial ply pneumatic tire 20 of claim 7 wherein θ equals less than 45° relative to the equatorial plane,

9. The radial ply pneumatic tire 20 of claim 8 wherein the leading 41,51 and trailing edges 42,52 of the first and second rows of lugs have a tangency to the curvature R₁ or R₂ at an axially outermost point along the respective edge, the tangency being inclined at an angle αₒ of about 90° relative to the equatorial plane.

## Patentansprüche

1. Radialluftreifen (20) für Anwendungen im industriellen Betrieb, wobei der Reifen (20) einen Mantel (21) aufweist, wobei der Mantel (21) besitzt: mindestens eine durch gummibeschichtete Korde verstärkte Lage (22), ein Paar sich ringförmig erstreckende Wulstkerne (24), wobei die mindestens eine Lage (22) um jeden Wulstkern (24) umgeschlagen ist und sich dazwischen erstreckt, eine Gürtelverstärkungsaufbau (28), der mit gummibeschichteten Korden verstärkt ist, und einen Laufstreifen (32), der radial außerhalb des Mantels (21) angeordnet ist, wobei der Laufstreifen (32) eine innere Laufstreifenbasis (34) und zwei Seitenkanten (33A, 33B) besitzt, wobei der Abstand auf halbem Wege zwischen den Seitenkanten (33A, 33B) die Laufstreifen-Äquatorialebene (EP) definiert, und eine Vielzahl von Stollen (40, 50, 60) sich radial von der inneren Laufstreifenbasis (34) nach außen erstreckt, und der Laufstreifen aufweist:
drei Reihen von Stollen (40, 50, 60), von denen eine erste Reihe (40) sich von einem ersten Schulterbereich des Laufstreifens (32) axial nach innen erstreckt, eine zweite Reihe (50) sich von einem zweiten Schulterbereich des Laufstreifens (32) axial nach innen erstreckt, und eine zentrale Reihe (60) zwischen der ersten und der zweiten Reihe (40, 50) eingesetzt ist, wobei die Stollen (40) der ersten Reihe von gleichartiger Form, jedoch von entgegengesetzter Ausrichtung relativ zu den Stollen (50) der zweiten Reihe sind, jeder Stollen (40) der ersten Reihe innerhalb einer ersten Laufstreifenhälfte (32A) liegt, jeder Stollen (50) der zweiten Reihe innerhalb einer zweiten Laufstreifenhälfte (32B) liegt, die Stollen (60) der zentralen Reihe sowohl in der ersten Laufstreifenhälfte (32A) als auch der zweiten Laufstreifenhälfte (32B) liegen, die Stollen (40, 50, 60) jeweils eine einlaufseitige Kante (41, 51, 61) und eine auslaufseitige Kante (42, 52, 62) aufweisen, und der Laufstreifen **dadurch gekennzeichnet ist:**
**daß** der Abstand längs einer Mittellinie zwischen der einlaufseitigen ersten und der auslaufseitigen zweiten Kante die Gesamtlänge L₁ definiert, jeder Stollen (40, 50, 60) eine Gesamtstollenlänge von mindestens 10% bis 30% der Gesamtlaufstreifenbreite aufweist, der zentrale Stollen (60) einen vergrößerten Einlaufkanten-Stollenkopfabschnitt (64) aufweist, der sich von der einlaufseitigen Kante (61) weg erstreckt, und einen vergrößerten Auslaufkanten-Stollenkopfabschnitt (66), der sich von der auslaufseitigen Kante (62) weg erstreckt, wobei die vergrößerten Stollenkopfabschnitte (64, 66) die Äquatorial-Mittenebene des Reifens überschneiden, die einlaufseitige Kante (41) eines Stollens (40) der ersten Reihe und die einlaufseitige Kante (61) des zentralen Stollens (60) ohne den vergrößerten Einlaufkanten-Stollenkopfabschnitt 64 definiert sind durch einen konstanten Krümmungsradius R₁ und die auslaufseitige Kante (52) eines Stollens (50) der zweiten Reihe und die auslaufseitige Kante (62) des zentralen Stollens ohne den vergrößerten Auslaufkanten-Stollenkopfabschnitt (66) definiert sind durch einen konstanten Krümmungsradius R₂, wobei die Ursprünge der Krümmungsradien R₁, R₂ in Umfangsrichtung gegenüberliegend in einer Laufstreifenhälfte (32A) relativ zu der anderen Laufstreifenhälfte (32B) angeordnet sind.

2. Radialluftreifen (20) nach Anspruch 1, bei dem der vergrößerte Auslaufkanten-Stollenkopf (62) eines zentralen Stollens (60) mit einem vergrößerten Einlaufkanten-Stollenkopf (64) durch eine Verbindungsleiste (70) mit reduzierter Höhe verbunden ist.

3. Radialluftreifen (20) nach Anspruch 2, bei dem der zentrale Stollen (60) eine radiale Höhe h, von der inneren Laufstreifenbasis (34) gemessen, aufweist, und die die Stollenköpfe (62, 64) miteinander verbindende Verbindungsleiste (70) eine radiale Höhe h_{T1} von mindestens 50% h aufweist.

4. Radialluftreifen (20) nach Anspruch 3, bei dem die Stollen (40) der ersten Reihe und die axial benachbarten zentralen Stollen (60) durch einen Abstand s getrennt sind, der geringer als die minimale Breite des Stollens (40) ist, wobei sich innerhalb des Abstands s eine Verbindungsleiste (80) zwischen den axial benachbarten Stollen (40) der ersten Reihe und den Stollen (60) der zentralen Reihe erstreckt, wobei die Verbindungsleiste eine radiale Höhe h_{T2} von mindestens einer Hälfte der Stollenhöhe h besitzt.

5. Radialluftreifen nach Anspruch 3, bei dem die Stollen (50) der zweiten Reihe und die axial benachbarten zentralen Stollen (60) durch einen Abstand s getrennt sind, der geringer als die minimale Breite des Stollens ist, wobei sich innerhalb des Abstands s eine Verbindungsleiste (80) zwischen den axial benachbarten Stollen (50) der zweiten Reihe und den Stollen (60) der zentralen Reihe erstreckt, wobei die Verbindungsleiste (80) eine radiale Höhe h_{T2} von mindestens einer Hälfte der Stollenhöhe h aufweist.

6. Radialluftreifen (20) nach Anspruch 1, bei dem das um den Umfang des Reifens (20) gemessene Netto/Brutto-Verhältnis weniger als 50% beträgt.

7. Radialluftreifen (20) nach Anspruch 1, bei dem die Krümmungen R₁ und R₂, wenn sie zur Überschneidung mit der Äquatorialebene des Reifens verlängert sind, Tangentenlinien an der Stelle der Überschneidung besitzen, die mit einem Winkel θ, θ, der kleiner als 60° ist, relativ zur Äquatorialebene geneigt sind.

8. Radialluftreifen (20) nach Anspruch 7, bei dem θ relativ zur Äquatorialebene weniger als 45° beträgt.

9. Radialluftreifen (20) nach Anspruch 8, bei dem die einlaufseitigen Kanten (41, 51) und die auslaufseitigen Kanten (42, 52) der ersten und zweiten Stollenreihen (40, 50) eine Tangente an die Krümmung R₁ oder R₂ an einer axial äußersten Stelle längs der jeweiligen Kante besitzen, wobei die Tangente mit einem Winkel αₒ von etwa 90° relativ zur Äquatorialebene geneigt ist.

## Revendications

1. Bandage pneumatique 20 à nappe radiale pour des applications de matériels de manutention, le bandage pneumatique 20 comportant une carcasse 21, la carcasse 21 possédant au moins une nappe 12 renforcée par des câblés enrobés de caoutchouc, une paire de tringles de talons 24 s'étendant en direction annulaire, la ou lesdites nappes 22 entourant chaque tringle de talon 24 et s'étendant entre elles, une structure de renforcement de ceinture 28 renforcée avec des câblés enrobés de caoutchouc, et une bande de roulement 32 disposée à l'extérieur de la carcasse 21 en direction radiale, la bande de roulement 32 possédant une base de bande de roulement interne 34, deux bords latéraux 33A, 33B, l'endroit situé à mi-distance entre les bords latéraux 33A, 33B définissant le plan équatorial (EP) de la bande de roulement et plusieurs barrettes 40, 50, 60 s'étendant à l'extérieur de la base de bande de roulement interne 34 en direction radiale, la bande de roulement possédant :
trois rangées de barrettes 40, 50, 60, une première rangée 40 s'étendant vers l'intérieur en direction radiale depuis une première région d'épaulement de la bande de roulement 32, une deuxième rangée 50 s'étendant vers l'intérieur en direction axiale par rapport à une deuxième région d'épaulement de la bande de roulement 32, et une rangée centrale 60 étant positionnée entre les première et deuxième rangées 40, 50, les barrettes 40 de la première rangée étant de forme similaire, mais d'orientation opposée à celles des barrettes 50 de la deuxième rangée, chaque barrette 40 de la première rangée étant disposée dans les limites d'une première moitié de bande de roulement 32A, chaque barrette 50 de la deuxième rangée étant disposée dans les limites d'une deuxième moitié de bande de roulement 32B, les barrettes 60 de la rangée centrale étant disposées à la fois dans la première moitié de bande de roulement 32A et dans la deuxième moitié de bande de roulement 32B, les barrettes 40, 50, 60 possédant chacune un bord avant 41, 51, 61, et un bord arrière 42, 52, 62, la bande de roulement étant **caractérisée par le fait que** :
la distance s'étendant le long d'une ligne médiane entre le premier bord avant et le deuxième bord arrière définit la longueur totale L₁, chaque barrette 40 50 60 possède une longueur totale de barrette qui représente d'au moins 10 % à 30 % de la largeur totale de bande de roulement, la barrette centrale 60 possède une portion de tête agrandie de bord avant de barrette 64 s'étendant depuis le bord avant 61 et une portion de tête agrandie de bord arrière de barrette 66 s'étendant depuis le bord arrière 62, les portions de têtes de barrettes agrandies 64, 66 coupant le plan équatorial central du bandage pneumatique, le bord avant 41 d'une barrette 40 de la première rangée et le bord avant 61 de la barrette centrale 60, à l'exclusion de la portion de tête agrandie de bord avant de barrette 64, étant défini par un rayon de courbure constant R₁, et le bord arrière 52 d'une barrette 50 de la deuxième rangée et le bord arrière 62 de la barrette centrale 60, à l'exclusion de la portion de tête agrandie de bord arrière de barrette 66, étant défini par un rayon de courbure constant R₂, dans lequel les origines des rayons de courbure R₁, R₂, sont disposées en étant opposées en direction circonférentielle dans la première moitié de bande de roulement 32A par rapport à l'autre moitié de bande de roulement 32B.

2. Bandage pneumatique 20 à nappe radiale selon la revendication 1, dans lequel la tête agrandie de bord arrière de barrette 66 d'une barrette centrale 60 est reliée à une tête agrandie de bord avant de barrette 64 par un pont de gomme 70 de hauteur réduite.

3. Bandage pneumatique 20 à nappe radiale selon la revendication 2, dans lequel la barrette centrale 60 possède une hauteur radiale h telle qu'on la mesure à partir de la base de bande de roulement interne 34 et le pont de gomme 70 reliant les têtes de barrettes 66, 64 possède une hauteur radiale hT₁ qui représente au moins 50 % de h.

4. Bandage pneumatique 20 à nappe radiale selon la revendication 3, dans lequel les barrettes 40 de la première rangée et les barrettes centrales 60 adjacentes en direction axiale sont espacées l'une de l'autre sur une distance s inférieure à la largeur minimale de la barrette 40 ; dans les limites de la distance s, un pont de gomme 80 s'étend entre les barrettes 40 de la première rangée, adjacentes en direction axiale, et les barrettes de la rangée centrale 60, le pont de gomme possédant une hauteur radiale hT₂ qui représente au moins la moitié de la hauteur de barrette h.

5. Bandage pneumatique 20 à nappe radiale selon la revendication 3, dans lequel les barrettes 50 de la deuxième rangée et les barrettes centrales 60 adjacentes en direction axiale sont espacées l'une de l'autre sur une distance s inférieure à la largeur minimale de la barrette 50 ; dans les limites de la distance s, un pont de gomme 80 s'étend entre les barrettes 50 de la deuxième rangée, adjacentes en direction axiale, et les barrettes de la rangée centrale 60, le pont de gomme 80 possédant une hauteur radiale hT₂ qui représente au moins la moitié de la hauteur de barrette h.

6. Bandage pneumatique 20 à nappe radiale selon la revendication 1, dans lequel le rapport net/brut tel que mesuré autour de la circonférence du bandage pneumatique représente moins de 50 %.

7. Bandage pneumatique 20 à nappe radiale selon la revendication 1, dans lequel les courbures R₁ et R₂, lorsqu'elles s'étendent pour couper le plan équatorial du bandage pneumatique, possèdent des lignes tangentes à l'endroit d'intersection qui présentent une inclinaison en formant un angle θ, θ représentant un angle inférieur à 60° par rapport au plan équatorial.

8. Bandage pneumatique 20 à nappe radiale selon la revendication 7, dans lequel θ représente un angle inférieur à 45° par rapport au plan équatorial.

9. Bandage pneumatique 20 à nappe radiale selon la revendication 8, dans lequel les bords avant 41, 51 et les bords arrière 42, 52 des première et deuxième rangées de barrettes sont disposées en position tangentielle par rapport à la courbure R₁ ou R₂ à un endroit le plus éloigné en direction axiale le long du bord respectif, la tangente possédant une inclinaison α₀ qui forme un angle d'environ 90° par rapport au plan équatorial.
